# EUROPEAN PATENT APPLICATION

(11) **EP 4 383 494 A1**
(43) Date of publication of application: **12.06.2024**
(21) Application number: 21955333.6
(22) Date of filing: 30.08.2021
(51) Int. Cl.: H02H 7/08, H02H 7/09

(54) **CIRCUIT AND CONTROL METHOD THEREFOR**

(71) Applicant: Huawei Technologies Co., Ltd., Shenzhen, Guangdong 518129 (CN)
(72) Inventor: LIANG, Chen, Shenzhen, Guangdong 518129 (CN); QUE, Fasong, Shenzhen, Guangdong 518129 (CN); ZHENG, Hao, Shenzhen, Guangdong 518129 (CN)
(74) Representative: Körber, Martin Hans
(86) International application number: PCT/CN2021/115316
(87) International publication number: WO 2023/028752

(57) **Abstract**

This application provides a circuit, including: a first circuit unit, where a first end of the first circuit unit is configured to connect to an output end of a first inverter, a second end of the first circuit unit is configured to connect to a motor, and the first circuit unit is configured to be in a disconnected state under a first condition; and a second circuit unit, where the second circuit unit is configured to absorb an energy shock, a first end of the second circuit unit is connected to the first end of the first circuit unit, and a second end of the second circuit unit is connected to the second end of the first circuit unit. With the second circuit unit disposed, a counter electromotive force generated by the motor can be effectively absorbed, to prevent a failure of the first circuit unit caused by a shock of the counter electromotive force to the first circuit unit, thereby protecting normal running of a drive circuit, and preventing the motor from being stuck. This improves safety performance of a vehicle.

## Description

### TECHNICAL FIELD

This application relates to the automobile field, and specifically, to a circuit, a control method, a control apparatus, a steering system, and a vehicle.

### BACKGROUND

When a vehicle turns, for example, when a vehicle wheel accidentally hits a roadside shoulder as the vehicle makes a sharp turn, the shoulder exerts a reverse force on a tire, and thereby pushes a stroke of a steering rack in an opposite direction. The steering rack exerts a force on a motor rotor through a gear, and as a result, a motor generates an electromotive force opposite to an applied voltage. The electromotive force is referred to as a counter electromotive force. The counter electromotive force generated by the motor shocks a drive circuit of the motor, and consequently, the drive circuit fails. This endangers people and the vehicle.

To avoid the foregoing case, an open-phase circuit is disposed between a winding of the motor and the drive circuit. The open-phase circuit is configured to disconnect the winding of the motor from the drive circuit when the motor or the drive circuit fails, thereby avoiding a case in which the motor is stuck.

However, in such a solution, a shock caused by a counter electromotive force of the motor to the open-phase circuit is not considered. If the open-phase circuit fails under the shock of the counter electromotive force, safety performance of the vehicle is still reduced.

### SUMMARY

In view of the foregoing problem, this application provides a circuit, a circuit control method, a control apparatus, a steering system, and a vehicle, which can effectively absorb a counter electromotive force generated by a motor, thereby avoiding a case in which an open-phase circuit fails as the counter electromotive force shocks the open-phase circuit, and improving safety performance of a vehicle.

According to a first aspect of embodiments of this application, a circuit is provided. The circuit includes: a first circuit unit, where a first end of the first circuit unit is configured to connect to an output end of a first inverter, a second end of the first circuit unit is configured to connect to a motor, and the first circuit unit is configured to be in a disconnected state under a first condition; and a second circuit unit, where the second circuit unit is configured to absorb an energy shock, a first end of the second circuit unit is connected to the first end of the first circuit unit, and a second end of the second circuit unit is connected to the second end of the first circuit unit.

With the second circuit unit disposed, a counter electromotive force generated by the motor can be effectively absorbed, to avoid a failure of the first circuit unit caused by a shock of the counter electromotive force to the first circuit unit (also referred to as an open-phase circuit), thereby preventing the counter electromotive force from shocking the first inverter of the motor, and avoiding a case in which the motor is stuck due to a failure of the first inverter. This improves vehicle safety.

In some embodiments, the circuit may further include the first inverter. The first inverter may specifically include a control circuit (also referred to as a control unit in this application), a drive circuit, and an inverter circuit. The control circuit may be configured to obtain a motor control signal based on a received instruction used to instruct to turn. The drive circuit is connected to the control circuit, and is configured to obtain a switching time sequence signal based on the motor control signal. The inverter circuit may convert a direct current electrical signal into an alternating current electrical signal based on the switching time sequence signal, to drive the motor. The inverter circuit may be a bridge circuit or an inverter circuit in another form. When the inverter circuit is a bridge inverter circuit, the inverter circuit may be a full-bridge inverter circuit or a half-bridge inverter circuit.

In some embodiments, the control circuit, the drive circuit, the inverter circuit, the first circuit unit, and the second circuit unit may be laid out on a same circuit board. Alternatively, the inverter circuit, the first circuit unit, and the second circuit unit may be laid out on a same circuit board, and the control circuit and the drive circuit are detachably connected to the inverter circuit. Alternatively, the drive circuit, the inverter circuit, the first circuit unit, and the second circuit unit may be laid out on a same circuit board.

The motor may be a Y-type motor, a triangular motor, or the like. This is not limited in this application.

In a possible implementation, the circuit further includes: a third circuit unit, where a first end of the third circuit unit is configured to connect to an output end of a second inverter, a second end of the third circuit unit is configured to connect to the motor, and the third circuit unit is configured to be in a disconnected state under a second condition; and a fourth circuit unit, configured to absorb an energy shock, where a first end of the fourth circuit unit is connected to the first end of the third circuit unit, and a second end of the fourth circuit unit is connected to the second end of the third circuit unit.

Through the foregoing configuration, the first circuit unit and the third circuit unit can be protected in a motor control system of the redundant inverter, to avoid a failure of the first circuit unit or the third circuit unit caused by a shock of the counter electromotive force to the first circuit unit or the third circuit unit, thereby preventing the counter electromotive force from shocking the redundant inverter of the motor.

In a possible implementation, the motor includes a first winding and a second winding. That a second end of the first circuit unit is configured to connect to a motor specifically includes: the second end of the first circuit unit is configured to connect to the first winding of the motor. That a second end of the third circuit unit is configured to connect to the motor specifically includes: the second end of the third circuit unit is configured to connect to the second winding of the motor.

Through the foregoing configuration, one winding of the motor is controlled by using the first inverter and the second inverter. For example, 50% of power supply to the motor is implemented by using the first inverter, and 50% of power supply to the motor is implemented by using the second inverter. Alternatively, the two windings of the motor may be controlled by using the first inverter and the second inverter, respectively. For example, the first winding of the motor is controlled by using the first inverter, and the second winding of the motor is controlled by using the second inverter, to ensure running of the motor when one or more of the first inverter and the second inverter are faulty.

In a possible implementation, the circuit further includes a fifth circuit unit. A first end of the fifth circuit unit is connected to the first end of the first circuit unit, a second end of the fifth circuit unit is connected to the second end of the third circuit unit, and the fifth circuit unit is configured to be connected under a third condition.

In a possible implementation, the third condition includes at least one of the following: the second inverter is faulty, the third circuit unit is faulty, or the fourth circuit unit is faulty.

Through the foregoing configuration, the motor can be controlled when the second inverter is faulty, the third circuit unit is faulty, and the fourth circuit unit is faulty. This avoids a motor failure.

In a possible implementation, the circuit further includes a sixth circuit unit. A first end of the sixth circuit unit is connected to the first end of the third circuit unit, a second end of the sixth circuit unit is connected to the second end of the first circuit unit, and the sixth circuit unit is configured to be connected under a fourth condition.

In a possible implementation, the fourth condition includes at least one of the following: the first inverter is faulty, the first circuit unit is faulty, or the second circuit unit is faulty.

Through the foregoing configuration, the motor can be controlled when the first inverter is faulty, the first circuit unit is faulty, and the second circuit unit is faulty. This avoids a motor failure.

In a possible implementation, the second circuit unit includes a transient voltage suppression diode; and that a first end of the second circuit unit is connected to the first end of the first circuit unit, and a second end of the second circuit unit is connected to the second end of the first circuit unit specifically includes: a first end of the transient voltage suppression diode is connected to the first end of the first circuit unit, and a second end of the transient voltage suppression diode is connected to the second end of the first circuit unit.

Through the foregoing configuration, the counter electromotive force generated by the motor can be instantaneously absorbed, to prevent the counter electromotive force from shocking the first circuit unit, thereby avoiding a shock caused by the counter electromotive force to the drive circuit, and clamping a voltage at two ends of the first circuit unit to a predetermined value. In addition, because the transient voltage suppression diode can clamp the voltage at the two ends of the first circuit unit to a predetermined value, an MOS transistor with a comparatively low rated voltage may be allowed to be used as the first circuit unit, thereby avoiding a problem that the MOS transistor overheats due to an increase in impedance of the MOS transistor when the MOS transistor is turned on.

In a possible implementation, the second circuit unit further includes a first resistor, a first end of the first resistor is connected to the transient voltage suppression diode, and a second end of the first resistor is connected to the second end of the first circuit unit.

Through the foregoing configuration, a rated voltage of the transient voltage suppression diode can be effectively reduced, thereby reducing costs of the transient voltage suppression diode, and moreover, a counter electromotive force absorption capability of the second circuit unit can also be improved.

In a possible implementation, the second circuit unit further includes a first capacitor, and the first capacitor is connected in parallel to the first resistor.

Through the foregoing configuration, the counter electromotive force absorption capability of the second circuit unit can be improved, and moreover, the capacitor and the resistor connected in parallel to each other can also effectively reduce a selection specification of the transient voltage suppression diode, so that a transient voltage suppression diode with a comparatively low rated voltage can be used, thereby reducing product costs.

In a possible implementation, the first circuit unit includes an NMOS transistor, a source electrode of the NMOS transistor is connected to the inverter, and a drain electrode of the NMOS transistor is configured to connect to the motor.

Through the foregoing configuration, in a dual-redundancy motor control system, the counter electromotive force generated by the motor can be effectively absorbed, to avoid a failure of the first circuit unit and/or the second circuit unit caused by a shock of the counter electromotive force to the first circuit unit and/or the second circuit unit, thereby preventing the counter electromotive force from shocking the front-end drive circuit. This improves vehicle safety.

According to a second aspect of embodiments of this application, a circuit control method is provided. A circuit includes a first circuit unit and a second circuit unit. A first end of the first circuit unit is configured to connect to an output end of a first inverter. A second end of the first circuit unit is configured to connect to a motor. The first circuit unit is configured to be in a disconnected state under a first condition. The second circuit unit is configured to absorb an energy shock. A first end of the second circuit unit is connected to the first end of the first circuit unit. A second end of the second circuit unit is connected to the second end of the first circuit unit. The method includes: obtaining a rotational speed of the motor; if the rotational speed of the motor is less than a first threshold, determining whether the first condition is met; and when the first condition is met, controlling the first circuit unit to be in the disconnected state.

Through the foregoing configuration, whether the first condition is met can be determined based on the rotational speed of the motor, and when the first condition is met, the first circuit unit is controlled to be in the disconnected state, thereby preventing a failure of the first circuit unit.

In a possible implementation, the first condition includes that the energy shock is detected, where the energy shock includes at least one of the following: a counter electromotive force shock or a current shock.

Through the foregoing configuration, whether the energy shock is generated can be determined based on the rotational speed of the motor, thereby preventing the first circuit unit from failing under the energy shock.

In a possible implementation, the obtaining a rotational speed of the motor specifically includes: obtaining angular velocity information of the motor and steering wheel torque information; obtaining a first rotational speed of the motor based on the angular velocity information of the motor, and obtaining a second rotational speed of the motor based on the steering wheel torque information; and if a rotational speed difference between the first rotational speed and the second rotational speed is less than a second threshold, obtaining a third rotational speed based on the first rotational speed and the second rotational speed, and using the third rotational speed as the rotational speed of the motor.

The third rotational speed may be the first rotational speed, may be the second rotational speed, or may be a weighted average of the first rotational speed and the second rotational speed.

Through the foregoing configuration, whether the rotational speed of the motor is accurate can be determined, and then whether the first condition is met can be determined based on the rotational speed. Disconnection and connection of the first circuit unit are controlled based on whether the first condition is met, thereby ensuring normal running of the motor, and preventing a failure of the first circuit unit.

In a possible implementation, the circuit further includes a third circuit unit, a fourth circuit unit, and a fifth circuit unit. A first end of the third circuit unit is configured to connect to an output end of a second inverter. A second end of the third circuit unit is configured to connect to the motor. The third circuit unit is configured to be in a disconnected state under a second condition. The fourth circuit unit is configured to absorb an energy shock. A first end of the fourth circuit unit is connected to the first end of the third circuit unit. A second end of the fourth circuit unit is connected to the second end of the third circuit unit. A first end of the fifth circuit unit is connected to the first end of the first circuit unit. A second end of the fifth circuit unit is connected to the second end of the third circuit unit. The fifth circuit unit is configured to be connected under a third condition. The method further includes: obtaining a fault signal of the second inverter, the third circuit unit, and the fourth circuit unit; and if the fault signal indicates that at least one of the second inverter, the third circuit unit, or the fourth circuit unit is faulty, that is, the third condition is met, controlling the fifth circuit unit to be connected.

Through the foregoing configuration, when at least one of the second inverter, the third circuit unit, or the fourth circuit unit is faulty, the fifth circuit unit can be controlled to be connected, so that the first inverter controls the motor, thereby avoiding a failure of the motor.

In a possible implementation, the circuit further includes a sixth circuit unit. A first end of the sixth circuit unit is connected to the first end of the third circuit unit. A second end of the sixth circuit unit is connected to the second end of the first circuit unit. The sixth circuit unit is configured to be connected under a fourth condition. The method further includes: obtaining a fault signal of the first inverter, the first circuit unit, and the second circuit unit; and if the fault signal indicates that at least one of the first inverter, the first circuit unit, or the second circuit unit is faulty, that is, the fourth condition is met, controlling the sixth circuit unit to be connected.

Through the foregoing configuration, when at least one of the first inverter, the first circuit unit, or the second circuit unit is faulty, the sixth circuit unit can be controlled to be connected, so that the second inverter controls the motor, thereby avoiding a failure of the motor.

In a possible implementation, the second condition includes that the energy shock is detected, where the energy shock includes at least one of the following: a counter electromotive force shock or a current shock.

According to a third aspect of embodiments of this application, a circuit control apparatus is provided. A circuit includes a first circuit unit and a second circuit unit. A first end of the first circuit unit is configured to connect to an output end of a first inverter. A second end of the first circuit unit is configured to connect to a motor. The first circuit unit is configured to be in a disconnected state under a first condition. The second circuit unit is configured to absorb an energy shock. A first end of the second circuit unit is connected to the first end of the first circuit unit. A second end of the second circuit unit is connected to the second end of the first circuit unit. The control apparatus includes: an obtaining unit, configured to obtain a rotational speed of the motor; and a control unit, configured to: when the rotational speed of the motor is less than a first threshold, determine whether the first condition is met. The control unit is further configured to: when the first condition is met, control the first circuit unit to be in the disconnected state.

In a possible implementation, the first condition includes that the energy shock is detected, where the energy shock includes at least one of the following: a counter electromotive force shock or a current shock.

In a possible implementation, the obtaining unit is specifically configured to: obtain angular velocity information of the motor and steering wheel torque information; obtain a first rotational speed of the motor based on the angular velocity information of the motor, and obtain a second rotational speed of the motor based on the steering wheel torque information; and if a rotational speed difference between the first rotational speed and the second rotational speed is less than a second threshold, obtain a third rotational speed based on the first rotational speed and the second rotational speed, and use the third rotational speed as the rotational speed of the motor.

In a possible implementation, the circuit further includes a third circuit unit, a fourth circuit unit, and a fifth circuit unit. A first end of the third circuit unit is configured to connect to an output end of a second inverter. A second end of the third circuit unit is configured to connect to the motor. The third circuit unit is configured to be in a disconnected state under a second condition. The fourth circuit unit is configured to absorb an energy shock. A first end of the fourth circuit unit is connected to the first end of the third circuit unit. A second end of the fourth circuit unit is connected to the second end of the third circuit unit. A first end of the fifth circuit unit is connected to the first end of the first circuit unit. A second end of the fifth circuit unit is connected to the second end of the third circuit unit. The fifth circuit unit is configured to be connected under a third condition. The obtaining unit is further configured to obtain a fault signal of the second inverter, the third circuit unit, and the fourth circuit unit. The control unit is further configured to: if the fault signal indicates that at least one of the second inverter, the third circuit unit, or the fourth circuit unit is faulty, that is, the third condition is met, control the fifth circuit unit to be connected.

In a possible implementation, the circuit further includes a sixth circuit unit. A first end of the sixth circuit unit is connected to the first end of the third circuit unit. A second end of the sixth circuit unit is connected to the second end of the first circuit unit. The sixth circuit unit is configured to be connected under a fourth condition. The obtaining unit is further configured to obtain a fault signal of the first inverter, the first circuit unit, and the second circuit unit. The control unit is further configured to: if the fault signal indicates that at least one of the first inverter, the first circuit unit, or the second circuit unit is faulty, that is, the fourth condition is met, control the sixth circuit unit to be connected.

In a possible implementation, the second condition includes that the energy shock is detected, where the energy shock includes at least one of the following: a counter electromotive force shock or a current shock.

Technical effects brought by the circuit control apparatus provided in any one of the third aspect or the possible implementations of the third aspect of the embodiments of this application are the same as technical effects brought by the circuit control method provided in any one of the second aspect or the possible implementations of the second aspect of this application. For brevity, details are not described herein again.

According to a fourth aspect of embodiments of this application, a computing device is provided. The computing device includes a processor and a memory. The processor is coupled to the memory. The memory is configured to store a program or instructions. When the program or the instructions is/are executed by the processor, the computing device is enabled to perform the control method according to any one of the second aspect or the possible implementations of the second aspect of the embodiments of this application.

According to a fifth aspect of embodiments of this application, a computer-readable storage medium is provided. The computer-readable storage medium stores program code. When the program code is executed by a terminal or a processor in a terminal, the control method according to any one of the second aspect or the possible implementations of the second aspect of the embodiments of this application is implemented.

According to a sixth aspect of embodiments of this application, a computer program product is provided. When the computer program product is run on a computer, the control method according to any one of the second aspect or the possible implementations of the second aspect of the embodiments of this application is implemented.

According to a seventh aspect of embodiments of this application, a steering system is provided. The steering system includes the circuit provided in any one of the first aspect or the possible implementations of the first aspect of this application, the circuit control apparatus provided in any one of the third aspect or the possible implementations of the third aspect of the embodiments of this application, and a motor.

According to an eighth aspect of embodiments of this application, a vehicle is provided. The vehicle includes the circuit provided in any one of the first aspect or the possible implementations of the first aspect of this application, the circuit control apparatus provided in any one of the third aspect or the possible implementations of the third aspect of the embodiments of this application, and a motor.

With the second circuit unit disposed, the counter electromotive force generated by the motor can be effectively absorbed, to prevent a failure of the first circuit unit caused by the shock of the counter electromotive force to the first circuit unit, thereby protecting normal running of the drive circuit, and preventing the motor from being stuck. This improves safety performance of the vehicle.

With the transient voltage suppression diode disposed, the counter electromotive force generated by the motor can be instantaneously absorbed, to avoid the shock of the counter electromotive force to the first circuit unit, thereby preventing the counter electromotive force from shocking the drive circuit. In addition, the transient voltage suppression diode can clamp the voltage at the two ends of the first circuit unit to a predetermined value, so that an MOS transistor with a comparatively low rated voltage may be allowed to be used as the first circuit unit, thereby avoiding a problem that the MOS transistor overheats due to an increase in impedance of the MOS transistor when the MOS transistor is turned on.

The resistor is connected in series to the transient voltage suppression diode, and the capacitor is connected in parallel to the resistor, so that the counter electromotive force absorption capability of the second circuit unit can be improved, and moreover, the capacitor and the resistor connected in parallel to each other can also effectively reduce the selection specification of the transient voltage suppression diode, so that a transient voltage suppression diode with a comparatively low rated voltage can be used, thereby reducing product costs.

### BRIEF DESCRIPTION OF DRAWINGS

The following further describes features of the present invention and a relationship between the features with reference to accompanying drawings. All of the accompanying drawings are examples, and some features are not shown in actual proportions. In addition, in some accompanying drawings, features that are conventional in the field in this application and that are not necessary for this application may be omitted, or features that are not necessary for this application may be additionally shown. A combination of features shown in the accompanying drawings is not intended to limit this application. Furthermore, throughout this specification, same reference signs refer to same content. The accompanying drawings are specifically described as follows:
FIG. 1 is a schematic diagram of an application scenario of a circuit according to an embodiment of this application;
FIG. 2A is a schematic diagram of a motor control system according to an embodiment of this application;
FIG. 2B is a schematic diagram of a dual redundant motor control system according to an embodiment of this application;
FIG. 2C is a schematic diagram of a motor control system according to another embodiment of this application;
FIG. 2D is a schematic diagram of a motor control system according to still another embodiment of this application;
FIG. 3 is a schematic diagram of a motor control system according to another embodiment of this application;
FIG. 4 is a schematic diagram of a power unit of the motor control system shown in FIG. 3;
FIG. 5A is a partial enlarged diagram of a circuit according to an embodiment of this application;
FIG. 5B is a partial enlarged diagram of a circuit according to another embodiment of this application;
FIG. 6 is a flowchart of a circuit control method according to an embodiment of this application;
FIG. 7 is a schematic diagram of a circuit control apparatus according to an embodiment of this application; and
FIG. 8 is a schematic diagram of modules of a computing device according to an embodiment of this application.

### DESCRIPTION OF EMBODIMENTS

A circuit provided in embodiments of this application may be disposed in a control unit of an electric power steering (Electric Power Steering, EPS) system. The EPS system may include a steering wheel torque sensor, a vehicle speed sensor, a steering motor (sometimes also referred to as a motor), the control unit, and the like. The steering wheel torque sensor is configured to determine torque generated by a steering wheel. The vehicle speed sensor is configured to determine a speed of a vehicle. The control unit is configured to determine a rotation direction of the motor and a power current of the motor based on a torque signal and a vehicle speed signal that are obtained by the vehicle speed sensor and the steering wheel torque sensor, and control the motor to output corresponding power torque. The motor is configured to generate auxiliary power to implement power steering. In addition, the control unit may further control rotation of the motor according to a control instruction from, for example, a vehicle controller, to provide support for self driving.

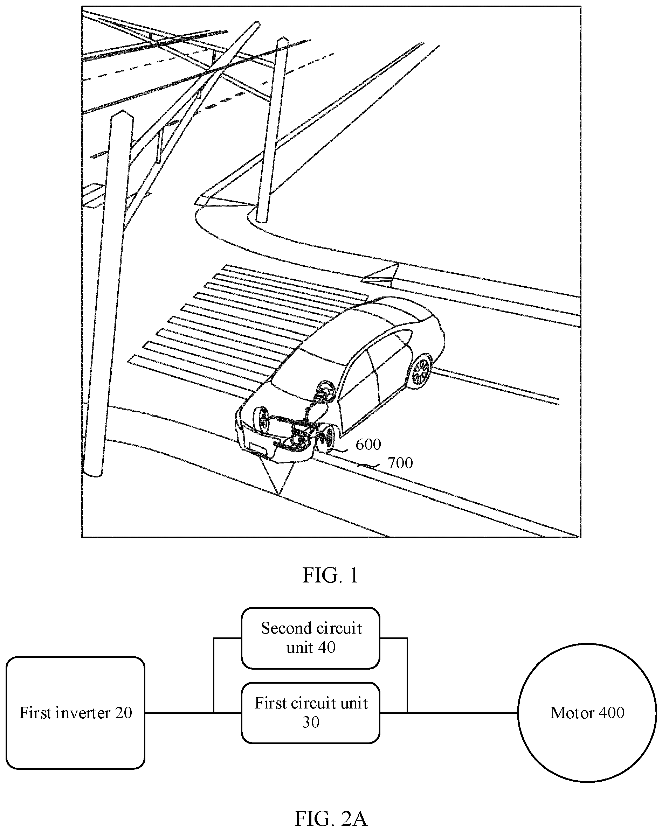

FIG. 1 shows an application scenario of a circuit according to an embodiment of this application. As shown in FIG. 1, when a vehicle makes a sharp turn, a vehicle wheel 600 may accidentally hit a roadside shoulder 700, in which case the shoulder 700 exerts a reverse force on the vehicle wheel 600, and consequently, a rotor of a motor rotates to cut a magnetic line of force, thereby generating a counter electromotive force. The counter electromotive force generated by the motor is absorbed by the circuit provided in this embodiment of this application, to avoid a case in which an open-phase circuit fails because the counter electromotive force generated by the motor shocks the open-phase circuit. This prevents the motor from being stuck due to a failure of a drive circuit, and improves safety performance of the vehicle.

FIG. 2A is a schematic diagram of a motor control system according to an embodiment of this application. As shown in FIG. 2A, the motor control system provided in this embodiment of this application may include a first inverter 20, a first circuit unit 30 (also referred to as an open-phase circuit), a second circuit unit 40, and a motor 400.

A first end of the first circuit unit 30 is configured to connect to an output end of the first inverter 20, a second end of the first circuit unit 30 is configured to connect to the motor 400, and the first circuit unit 30 is configured to be in a disconnected state under a first condition. The second circuit unit 40 is configured to absorb an energy shock, a first end of the second circuit unit 40 is connected to the first end of the first circuit unit 30, and a second end of the second circuit unit 40 is connected to the second end of the first circuit unit 30.

In some embodiments, the first inverter 20 may include a control unit, a drive circuit, and an inverter circuit. The control unit may be configured to obtain a motor control signal based on a received instruction used to instruct to turn. The drive circuit is connected to the control unit, and is configured to obtain a switching time sequence signal based on the motor control signal. For example, the drive circuit may convert a sine wave signal into a switching time sequence signal through PWM pulse width modulation (pulse width modulation, PWM). The inverter circuit is connected to the drive circuit. The inverter circuit may convert a direct current electrical signal into an alternating current electrical signal based on the switching time sequence signal, to drive the motor. The inverter circuit may be a bridge circuit or an inverter circuit in another form. When the inverter circuit is a bridge inverter circuit, the inverter circuit may be a full-bridge inverter circuit or a half-bridge inverter circuit.

In some embodiments, the inverter circuit may be a three-phase bridge, one end of the control unit may be connected to one end of the drive circuit, the other end of the drive circuit is connected to an input end of the three-phase bridge, an output end of the three-phase bridge is connected to the first end of the first circuit unit 30, the second end of the first circuit unit 30 is configured to connect to a winding of the motor 400, and a third end of the first circuit unit 30 is connected to the drive circuit.

The first condition may include that the energy shock is detected, where the energy shock includes at least one of the following: a counter electromotive force shock or a current shock. The motor may be a Y-type motor, a triangular motor, a double-winding motor, a single-winding motor, or the like. This is not limited in this application.

When the motor 400 generates a counter electromotive force, a voltage at the ends that are of the first circuit unit 30 and the second circuit unit 40 and that are configured to connect to the motor 400 is higher than a voltage at the ends that are of the first circuit unit 30 and the second circuit unit and that are connected to the inverter 20. In this case, the second circuit unit 40 can absorb the counter electromotive force generated by the motor 400, thereby avoiding a failure of the first circuit unit 30 caused by a shock of the counter electromotive force to the first circuit unit 30.

In some embodiments, the control circuit, the drive circuit, the inverter circuit, the first circuit unit 30, and the second circuit unit 40 may be laid out on a same circuit board. Alternatively, the inverter circuit, the first circuit unit 30, and the second circuit unit 40 may be laid out on a same circuit board, and the control circuit and the drive circuit are detachably connected to the inverter circuit. Alternatively, the drive circuit, the inverter circuit, the first circuit unit 30, and the second circuit unit 40 may be laid out on a same circuit board.

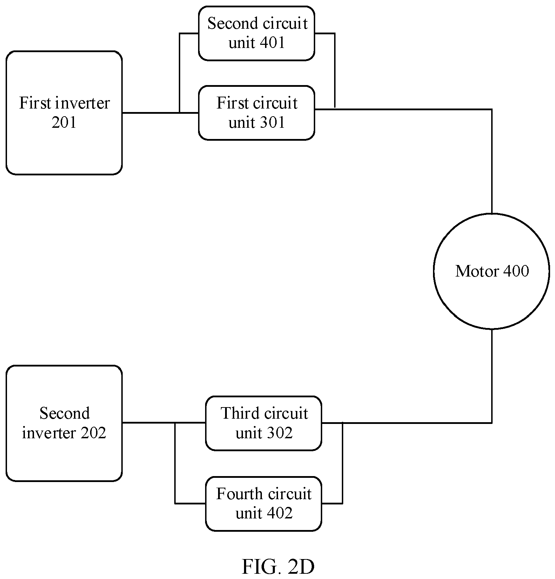

In some embodiments, as shown in FIG. 2D, in addition to a first inverter 201, a first circuit unit 301, and a second circuit unit 401, a motor control system may further include a second inverter 202, a third circuit unit 302, and a fourth circuit unit 402. The first inverter 201, the first circuit unit 301, and the second circuit unit 401 are the same as those in the foregoing embodiment. For brevity, details are not described herein again.

In some embodiments, the second inverter 202 may also include a control unit, a drive circuit, and an inverter circuit. For detailed descriptions of the control unit, the drive circuit, and the inverter circuit, refer to the foregoing embodiment. For brevity, details are not described herein again.

A first end of the third circuit unit 302 is connected to an output end of the second inverter 202, a second end of the third circuit unit 302 is connected to a motor 400, and the third circuit unit 302 is configured to be in a disconnected state under a second condition. The fourth circuit unit is configured to absorb an energy shock, a first end of the fourth circuit unit 402 is connected to the first end of the third circuit unit 302, and a second end of the fourth circuit unit 402 is connected to the second end of the third circuit unit 302.

The second condition may include that the energy shock is detected, where the energy shock includes at least one of the following: a counter electromotive force shock or a current shock.

In an example shown in FIG. 2D, the first inverter 201 and the second inverter 202 may be respectively connected to two windings of the motor 400. However, this application is not limited thereto. Alternatively, the first inverter 201 and the second inverter 202 may be connected to a same winding of the motor 400. For example, the first inverter 201 and the second inverter 202 may be connected to a first winding of the motor, and the first inverter 201 and the second inverter 202 may also be connected to a second winding of the motor, so that the first inverter 201 and the second inverter 202 can jointly control one winding of the motor.

Through the foregoing configuration, one winding of the motor is controlled by using the first inverter and the second inverter. For example, 50% of power supply to the motor is implemented by using the first inverter, and 50% of power supply to the motor is implemented by using the second inverter. Alternatively, the two windings of the motor may be controlled by using the first inverter and the second inverter, respectively. For example, the first winding of the motor is controlled by using the first inverter, and the second winding of the motor is controlled by using the second inverter, to ensure running of the motor when one or more of the first inverter and the second inverter are faulty.

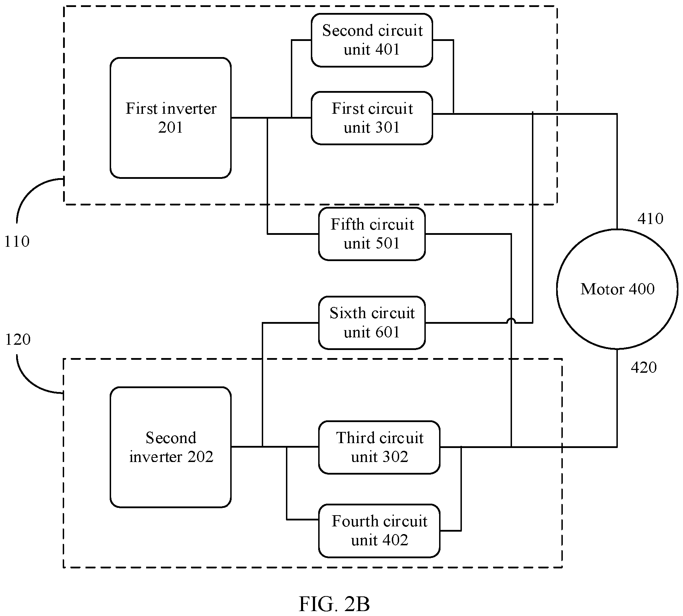

In some embodiments, the circuit may be alternatively applied to a dual redundant motor control system. FIG. 2B is a schematic diagram of a dual redundant motor control system according to an embodiment of this application. As shown in FIG. 2B, the dual redundant motor control system may include a first redundant control system 110, a second redundant control system 120, a fifth circuit unit 501, a sixth circuit unit 601, and a motor 400.

The first redundant control system 110 may include a first inverter 201, a first circuit unit 301 (also referred to as an open-phase circuit), and a second circuit unit 401. The second redundant control system 120 may include a second inverter 202, a third circuit unit 302 (also referred to as an open-phase circuit), and a fourth circuit unit 402.

A first end of the first circuit unit 301 is connected to an output end of the first inverter 201, a second end of the first circuit unit 301 is connected to a first winding 410 of the motor 400, and the first circuit unit 301 is configured to be in a disconnected state under a first condition. The second circuit unit 401 is configured to absorb an energy shock, a first end of the second circuit unit 401 is connected to the first end of the first circuit unit 301, and a second end of the second circuit unit 401 is connected to the second end of the first circuit unit 301.

A first end of the third circuit unit 302 is configured to connect to an output end of the second inverter 201, a second end of the third circuit unit 302 is connected to a second winding 420 of the motor 400, and the third circuit unit 302 is configured to be in a disconnected state under a second condition. The fourth circuit unit 402 is configured to absorb an energy shock, a first end of the fourth circuit unit 402 is connected to the first end of the third circuit unit 302, and a second end of the fourth circuit unit 402 is connected to the second end of the third circuit unit 302.

The first condition and the second condition may include that the energy shock is detected, where the energy shock includes at least one of the following: a counter electromotive force shock or a current shock.

Similar to those in the foregoing embodiments, each of the first inverter 201 and the second inverter 202 may include a control unit, a drive circuit, and an inverter circuit. For a connection relationship between the control unit, the drive circuit, and the inverter circuit, respective functions of the control unit, the drive circuit, and the inverter circuit, and connection relationships between another circuit unit and the control unit, the drive circuit, and the inverter circuit, refer to the foregoing embodiments. For brevity, details are not described herein again.

A first end of the fifth circuit unit 501 is connected to the first end of the first circuit unit 301, a second end of the fifth circuit unit 501 is connected to the second end of the third circuit unit 302, and the fifth circuit unit 501 is configured to be connected when at least one of the second inverter 202, the third circuit unit 302, or the fourth circuit unit 402 is faulty, to control the motor 400. A first end of the sixth circuit unit 601 is connected to the first end of the third circuit unit 302, a second end of the sixth circuit unit 601 is connected to the second end of the first circuit unit 301, and the sixth circuit unit 601 is configured to be connected when at least one of the first inverter 201, the first circuit unit 301, or the second circuit unit 401 is faulty, to control the motor 400.

In some embodiments, the second circuit unit 40 or 401 and the fourth circuit unit 402 may include a transient voltage suppression diode (Transient Voltage Suppressor, TVS). When an end that is of the TVS diode and that is connected to the motor winding is shocked by a transient counter electromotive force from the motor 400, the TVS diode can suddenly reduce impedance thereof at an extremely high speed, and absorb a large current at the same time, to clamp a voltage between two ends thereof to a predetermined value, thereby ensuring that the first circuit unit 301 is not damaged under a shock of the transient high-energy counter electromotive force. In addition, because the TVS diode can clamp a voltage at two ends of the first circuit unit 301 to a predetermined value, an MOS transistor with a comparatively low rated voltage may be allowed to be used as the first circuit unit, thereby avoiding a problem that the MOS transistor overheats due to an increase in impedance of the MOS transistor when the MOS transistor is turned on.

In some embodiments, one or more of the second circuit unit 40 or 401 and the fourth circuit unit 402 further include a resistor. One end of the resistor is connected to the TVS diode, and the other end of the resistor is connected to the winding of the motor.

The TVS diode can instantaneously absorb the counter electromotive force generated by the motor, to prevent the counter electromotive force from shocking the first circuit unit 301 and the third circuit unit 302, thereby avoiding a shock caused by the counter electromotive force to the drive circuit, and clamping a voltage at two ends of each of the first circuit unit 301 and the third circuit unit 302 to a predetermined value. In addition, because the TVS diode can clamp the voltage at the two ends of each of the first circuit unit 301 and the third circuit unit 302 to a predetermined value, MOS transistors with a comparatively low rated voltage may be allowed to be used as the first circuit unit 301 and the third circuit unit 302, thereby avoiding a problem that the MOS transistor overheats due to an increase in impedance of the MOS transistor when the MOS transistor is turned on.

In some embodiments, one or more of the second circuit unit 40 or 401 and the fourth circuit unit 402 further include a capacitor, and the capacitor is connected in parallel to the resistor.

The capacitor and the resistor connected in parallel to each other can improve counter electromotive force absorption capabilities of the second circuit unit 40 or 401 and the fourth circuit unit 402, and can also effectively reduce a selection specification of the TVS diode, so that a TVS diode with a comparatively low rated voltage can be used, thereby reducing product costs.

In some embodiments, the first circuit unit includes an NMOS transistor. A source electrode of the NMOS transistor is connected to the first inverter 201 or the second inverter 202, and a drain electrode of the NMOS transistor is configured to connect to the first winding 410 or the second winding 420 of the motor.

In some embodiments, the motor may include a double-winding three-phase motor. The double-winding three-phase motor includes the first winding 410 and the second winding 420, where the first winding 410 may include a first U-phase winding, a first V-phase winding, and a first W-phase winding, and the second winding 420 includes a second U-phase winding, a second V-phase winding, and a second W-phase winding. The motor may be a Y-type motor, a triangular motor, a double-winding motor, a single-winding motor, or the like. This is not limited in this application.

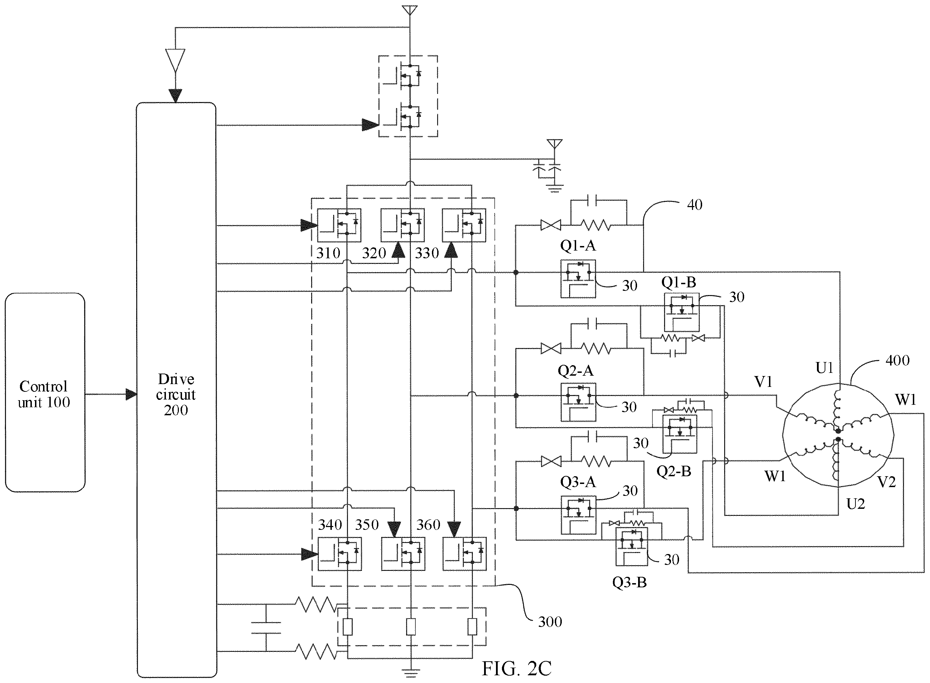

FIG. 2C is a schematic diagram of a motor control system according to another embodiment. As shown in FIG. 2C, the motor control system may include a motor 400, a control unit 100, a drive circuit 200, a three-phase bridge 300, a first circuit unit 30, and a second circuit unit 40.

The control unit 100 is configured to determine a rotation direction of the motor and a power current of the motor. The drive circuit 200 is connected to the control unit 100, and is configured to amplify a signal of the control unit 100, and convert a control instruction signal of the control unit 100 into a drive signal of the three-phase bridge 300, for example, adjust a magnitude of a current by adjusting a duty cycle of each switch of the three-phase bridge 300. The three-phase bridge 300 is connected to the drive circuit 200, and is configured to convert direct current electric energy into alternating current electric energy. The first circuit unit 30 is configured to connect the three-phase bridge 300 and a winding of the motor 400, and is configured to disconnect from the winding of the motor 400 when the motor 400 generates a counter electromotive force. The second circuit unit 40 is connected in parallel to the first circuit unit 30, and is configured to absorb, when the motor 400 generates the counter electromotive force, the counter electromotive force generated by the motor, to avoid a failure of the first circuit unit 30 caused by a shock of the counter electromotive force to the first circuit unit 30.

The three-phase bridge 300 may include an upper-bridge first MOS transistor 310, an upper-bridge second MOS transistor 320, and an upper-bridge third MOS transistor 330 whose source electrodes are respectively configured to connect to U1, V1, and W1 phases of a first winding of the motor 400 and U2, V2, and W2 phases of a second winding of the motor 400. The three-phase bridge 300 may further include a lower-bridge first MOS transistor 340, a lower-bridge second MOS transistor 350, and a lower-bridge third MOS transistor 360. The windings of the motor are controlled by controlling on/off time sequences of the upper-bridge MOS transistors 310, 320, and 330 and the lower-bridge MOS transistors 340, 350, and 360.

A drain electrode of the lower-bridge first MOS transistor 340 is connected to a source electrode of the upper-bridge first MOS transistor 310. A source electrode of the lower-bridge first MOS transistor 340 is used for grounding. A drain electrode of the lower-bridge second MOS transistor 350 is connected to a source electrode of the upper-bridge second MOS transistor 320. A source electrode of the lower-bridge second MOS transistor 350 is used for grounding. A drain electrode of the lower-bridge third MOS transistor 360 is connected to a source electrode of the upper-bridge third MOS transistor 330. A source electrode of the lower-bridge third MOS transistor 360 is used for grounding. Gate electrodes of the upper-bridge first MOS transistor 310, the upper-bridge second MOS transistor 320, the upper-bridge third MOS transistor 330, the lower-bridge first MOS transistor 340, the lower-bridge second MOS transistor 350, and the lower-bridge third MOS transistor 360 are connected to the drive circuit 200.

The first circuit unit 30 may be six NMOS transistors: a Q1-AMOS transistor, a Q2-AMOS transistor, a Q3-AMOS transistor, a Q1-BMOS transistor, a Q2-BMOS transistor, and a Q3-BMOS transistor. A source electrode of the Q1-AMOS transistor is connected to the source electrode of the upper-bridge first MOS transistor 310 of the three-phase bridge. A drain electrode of the Q1-AMOS transistor is connected to the U1 phase of the first winding of the motor 400. A gate electrode of the Q1-AMOS transistor is connected to the drive circuit 200. A source electrode of the Q2-AMOS transistor is connected to the source electrode of the upper-bridge second MOS transistor 320. A drain electrode of the Q2-AMOS transistor is connected to the V1 phase of the first winding of the motor 400. A gate electrode of the Q2-AMOS transistor is connected to the drive circuit 200. A source electrode of the Q3-AMOS transistor is connected to the source electrode of the upper-bridge third MOS transistor 330. A drain electrode of the Q3-AMOS transistor is connected to the W1 phase of the first winding of the motor 400. A gate electrode of the Q3-AMOS transistor is connected to the drive circuit 200. A source electrode of the Q1-BMOS transistor is connected to the source electrode of the upper-bridge first MOS transistor 310 of the three-phase bridge 300. A drain electrode of the Q1-BMOS transistor is connected to the U2 phase of the second winding of the motor 400. A gate electrode of the Q1-BMOS transistor is connected to the drive circuit 200. A source electrode of the Q2-BMOS transistor is connected to the source electrode of the upper-bridge second MOS transistor 320 of the three-phase bridge 300. A drain electrode of the Q2-BMOS transistor is connected to the V2 phase of the second winding of the motor 400. A gate electrode of the Q2-BMOS transistor is connected to the drive circuit 200. A source electrode of the Q3-BMOS transistor is connected to the source electrode of the upper-bridge third MOS transistor 330 of the three-phase bridge. A drain electrode of the Q3-BMOS transistor is connected to the W2 phase of the second winding of the motor 400. A gate electrode of the Q3-BMOS transistor is connected to the drive circuit 200.

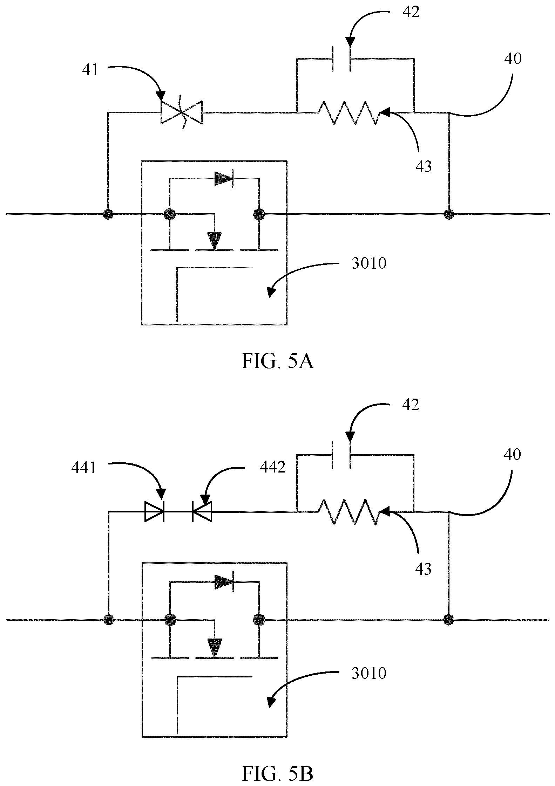

As shown in FIG. 5, a second circuit unit 40 may include a TVS diode 41, a capacitor 42, and a resistor 43. One end of the TVS diode 41 is connected to a source electrode of an MOS transistor 3010, and the other end of the TVS diode 41 is connected to one end of the resistor 43. When an end, of the TVS diode, connected to a winding of a motor is shocked by a transient high counter electromotive force, the TVS diode can suddenly reduce impedance thereof at an extremely high speed, and absorb a large current at the same time, to clamp a voltage between two ends thereof to a predetermined value, thereby ensuring that the MOS transistor 3010 is not damaged under a transient high-energy shock. In addition, because the TVS diode 41 can clamp the voltage between the two ends thereof to a predetermined value, an MOS transistor 3010 with a comparatively low rated voltage may be allowed to be used, thereby avoiding a problem that the MOS transistor 3010 overheats due to an increase in impedance of the MOS transistor 3010 when the MOS transistor 3010 is turned on.

The other end of the resistor 43 is connected to a drain electrode of the MOS transistor 3010, and the capacitor 42 is connected in parallel to the resistor 43. The capacitor 42 and the resistor 43 connected in parallel to each other can effectively reduce a selection specification of the TVS diode 41, so that a TVS diode with a comparatively low rated voltage can be used, thereby reducing product costs. Moreover, a counter electromotive force absorption capability of the second circuit unit can be improved.

In some embodiments, alternatively, the TVS diode 41 may be replaced with another electronic component configured to absorb a counter electromotive force from any phase of the motor. For example, the TVS diode 41 may be replaced with a diode.

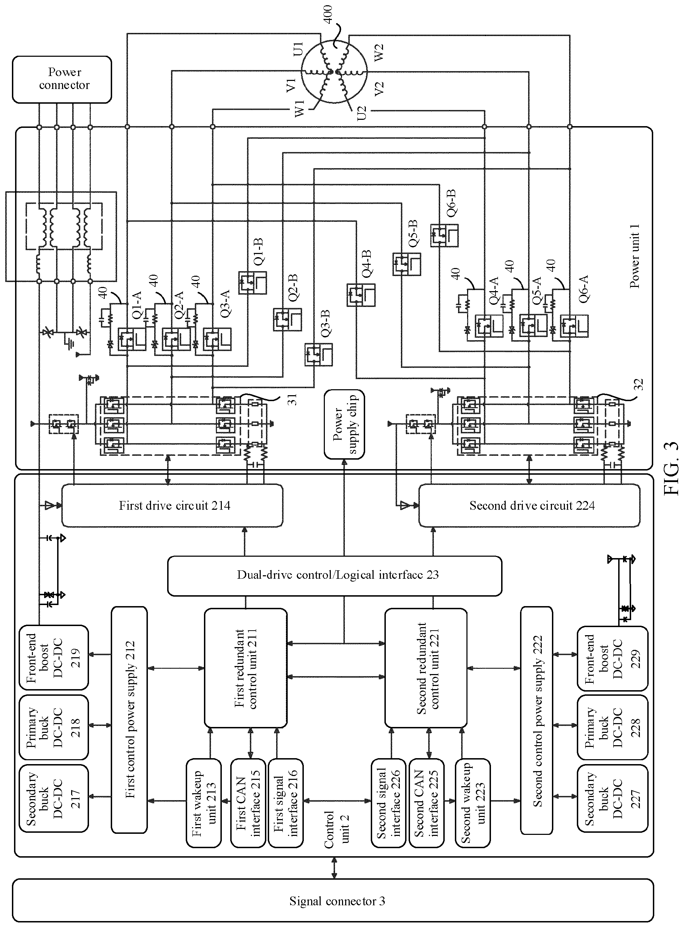

FIG. 3 is a schematic diagram of a motor control system according to another embodiment of this application. As shown in FIG. 3, the motor control system may include a motor 400, a signal connector 3, a control unit 2 connected to the signal connector 3, and a power unit 1 connected to the control unit 2 and U1, V1, W1, U2, V2, and W2 phases of windings of the motor 4. The control unit 2 is configured to output a control signal to the motor 4. The power unit 1 is configured to convert a low-voltage direct current control signal into a high-voltage alternating current control signal. The signal connector 3 is used for communication between the control unit 2 and another unit of a vehicle.

As shown in FIG. 3, the control unit 2 may include: a first redundant control unit 211 configured to perform calculation processing, a first control power supply 212 configured to supply power to the first redundant control unit 211, a first wakeup unit 213 that is connected to the first redundant control unit 211 and that is configured to wake up the first redundant control unit, a first drive circuit 214 configured to drive the motor, a first CAN interface 215 used for communication between the first redundant control unit 211 and another unit of the vehicle, a first signal interface 216 used for signal exchange between units of the control unit 2, a secondary buck DC-DC 217, a primary buck DC-DC 218, and a front-end boost DC-DC 219. The first redundant control unit 211 may be a microprogrammed control unit (Microprogrammed Control Unit, MCU), or may be another chip, for example, a system on chip or a universal chip. The control unit 2 further includes: a second redundant control unit 221 configured to perform calculation processing, a second control power supply 222 configured to supply power to the second redundant control unit 221, a second wakeup unit 223 that is connected to the second redundant control unit 221 and that is configured to wake up the second redundant control unit 221, a second drive circuit 224 configured to drive the motor 4, a dual-drive control/logical interface 23, where the dual-drive control/logical interface 23 is used for signal exchange between the first redundant control unit 211 and the first drive circuit 214 and signal exchange between the second redundant control unit 221 and the second drive circuit 224, a second CAN interface 225 used for communication between the second redundant control unit 221 and another unit of the vehicle, a second signal interface 226 used for signal exchange between units of the control unit 2, a secondary buck DC-DC 217, a primary buck DC-DC 218, and a front-end boost DC-DC 219. The second redundant control unit 221 may be an MCU, or may be another chip, for example, a system on chip or a universal chip. The first redundant control unit 211 and the second redundant control unit 221 are both configured to control the motor 4. When one of the first redundant control unit 211 and the second redundant control unit 221 fails, the other controls the motor 4.

As shown in FIG. 3, the power unit 1 may include: a first three-phase bridge 31 configured to convert a direct current control signal into an alternating current control signal, a Q1-AMOS transistor, a Q2-AMOS transistor, a Q3-AMOS transistor, a Q1-BMOS transistor, a Q2-BMOS transistor, and a Q3-BMOS transistor that are configured to connect the first three-phase bridge to the windings of the motor, and disconnect from the windings of the motor when the motor generates a counter electromotive force, and a second circuit unit 40 connected in parallel to the MOS transistors. The power unit 1 may further include: a second three-phase bridge 32 configured to convert a direct current control signal into an alternating current control signal, a Q4-AMOS transistor, a Q5-AMOS transistor, a Q6-AMOS transistor, a Q4-BMOS transistor, a Q5-BMOS transistor, and a Q6-BMOS transistor that are configured to connect the second three-phase bridge to the windings of the motor, and disconnect from the windings of the motor when the motor generates a counter electromotive force, and the second circuit unit 40 connected in parallel to the MOS transistors. The Q1-AMOS transistor, the Q2-AMOS transistor, the Q3-AMOS transistor, the Q1-BMOS transistor, the Q2-BMOS transistor, the Q3-BMOS transistor, the Q4-AMOS transistor, the Q5-AMOS transistor, the Q6-AMOS transistor, the Q4-BMOS transistor, the Q5-BMOS transistor, and the Q6-BMOS transistor may all be NMOS transistors.

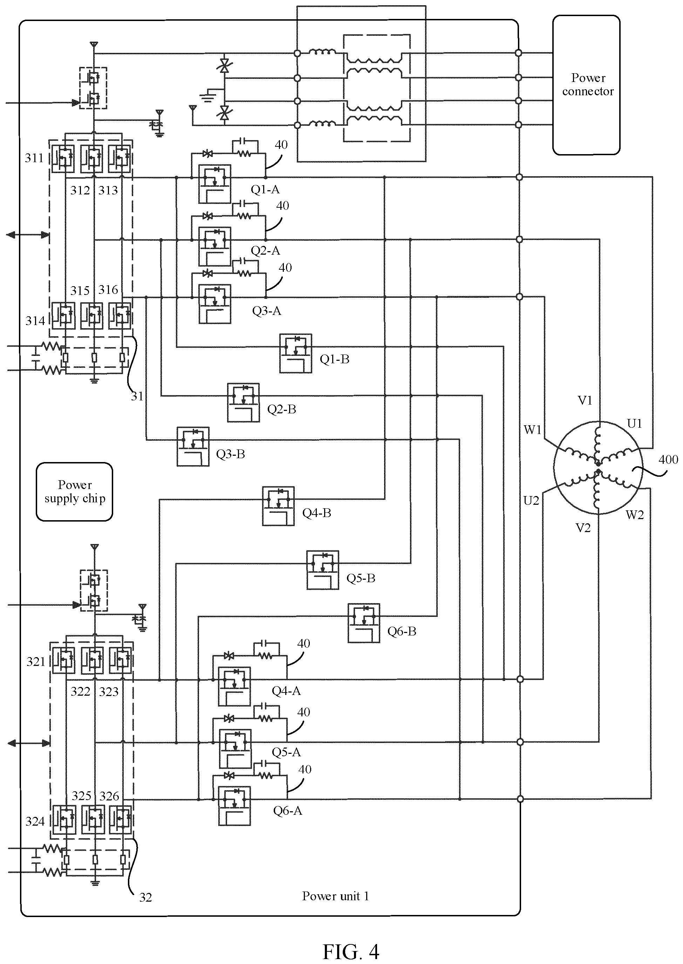

As shown in FIG. 4, the first three-phase bridge 31 may include an upper-bridge first MOS transistor 311, an upper-bridge second MOS transistor 312, and an upper-bridge third MOS transistor 313 whose source electrodes are respectively configured to connect to a U1 phase, a V1 phase, and a W1 phase of a first winding of the motor; and the first three-phase bridge 31 includes a lower-bridge first MOS transistor 314, a lower-bridge second MOS transistor 315, and a lower-bridge third MOS transistor 316. The windings of the motor are controlled by controlling on/off time sequences of the upper-bridge MOS transistors 311, 312, and 313 and the lower-bridge MOS transistors 314, 315, and 316.

A drain electrode of the lower-bridge first MOS transistor 314 is connected to a source electrode of the upper-bridge first MOS transistor 311. A source electrode of the lower-bridge first MOS transistor 314 is used for grounding. A drain electrode of the lower-bridge second MOS transistor 315 is connected to a source electrode of the upper-bridge second MOS transistor 312. A source electrode of the lower-bridge second MOS transistor 315 is used for grounding. A drain electrode of the lower-bridge third MOS transistor 316 is connected to a source electrode of the upper-bridge third MOS transistor 313. A source electrode of the lower-bridge third MOS transistor 316 is used for grounding. Gate electrodes of the upper-bridge first MOS transistor 311, the upper-bridge second MOS transistor 312, the upper-bridge third MOS transistor 313, the lower-bridge first MOS transistor 314, the lower-bridge second MOS transistor 315, and the lower-bridge third MOS transistor 316 are connected to the first drive circuit.

As shown in FIG. 4, the second three-phase bridge 32 may include an upper-bridge first MOS transistor 321, an upper-bridge second MOS transistor 322, and an upper-bridge third MOS transistor 323 whose source electrodes are respectively configured to connect to a U2 phase, a V2 phase, and a W2 phase of a second winding of the motor. The second three-phase bridge 32 may include a lower-bridge first MOS transistor 324, a lower-bridge second MOS transistor 325, and a lower-bridge third MOS transistor 326. A drain electrode of the lower-bridge first MOS transistor 324 is connected to a source electrode of the upper-bridge first MOS transistor 321. A source electrode of the lower-bridge first MOS transistor 324 is used for grounding. A drain electrode of the lower-bridge second MOS transistor 325 is connected to a source electrode of the upper-bridge second MOS transistor 322. A source electrode of the lower-bridge second MOS transistor 325 is used for grounding. A drain electrode of the lower-bridge third MOS transistor 326 is connected to a source electrode of the upper-bridge third MOS transistor 323. A source electrode of the lower-bridge third MOS transistor 326 is used for grounding. Gate electrodes of the upper-bridge first MOS transistor 321, the upper-bridge second MOS transistor 322, the upper-bridge third MOS transistor 323, the lower-bridge first MOS transistor 324, the lower-bridge second MOS transistor 325, and the lower-bridge third MOS transistor 326 are connected to the second drive circuit.

As shown in FIG. 3 and FIG. 4, a source electrode of the Q1-AMOS transistor is connected to the source electrode of the upper-bridge first MOS transistor 311 of the first three-phase bridge 31, a drain electrode of the Q1-AMOS transistor is connected to the U1 phase of the first winding of the motor, a gate electrode of the Q1-AMOS transistor is connected to the first drive circuit 214, a source electrode of the Q2-AMOS transistor is connected to the source electrode of the upper-bridge second MOS transistor 312, a drain electrode of the Q2-AMOS transistor is connected to the V1 phase of the first winding of the motor, a gate electrode of the Q2-AMOS transistor is connected to the first drive circuit 214, a source electrode of the Q3-AMOS transistor is connected to the source electrode of the upper-bridge third MOS transistor 313, a drain electrode of the Q3-AMOS transistor is connected to the W1 phase of the first winding of the motor, and a gate electrode of the Q3-AMOS transistor is connected to the first drive circuit 214.

As shown in FIG. 3 and FIG. 4, a source electrode of the Q4-AMOS transistor is connected to the source electrode of the upper-bridge first MOS transistor 321 of the second three-phase bridge 32, a drain electrode of the Q4-AMOS transistor is connected to the U2 phase of the second winding of the motor, a gate electrode of the Q4-AMOS transistor is connected to the second drive circuit 224, a source electrode of the Q5-AMOS transistor is connected to the source electrode of the upper-bridge second MOS transistor 322 of the second three-phase bridge 32, a drain electrode of the Q5-AMOS transistor is connected to the V2 phase of the second winding of the motor, a gate electrode of the Q5-AMOS transistor is connected to the second drive circuit 224, a source electrode of the Q6-AMOS transistor is connected to the source electrode of the upper-bridge third MOS transistor 323 of the second three-phase bridge 32, a drain electrode of the Q6-AMOS transistor is connected to the W2 phase of the second winding of the motor, and a gate electrode of the Q6-AMOS transistor is connected to the second drive circuit 224.

As shown in FIG. 3 and FIG. 4, a drain electrode of the Q1-BMOS transistor is connected to the source electrode of the upper-bridge first MOS transistor 311 of the first three-phase bridge 31, a source electrode of the Q1-BMOS transistor is connected to the U2 phase of the second winding of the motor, a gate electrode of the Q1-BMOS transistor is connected to the first drive circuit 214, a drain electrode of the Q2-BMOS transistor is connected to the source electrode of the upper-bridge second MOS transistor 312, a source electrode of the Q2-BMOS transistor is connected to the V2 phase of the second winding of the motor, a gate electrode of the Q2-BMOS transistor is connected to the first drive circuit 214, a drain electrode of the Q3-BMOS transistor is connected to the source electrode of the upper-bridge third MOS transistor 313, a source electrode of the Q3-BMOS transistor is connected to the W2 phase of the second winding of the motor, and a gate electrode of the Q3-BMOS transistor is connected to the first drive circuit 214. A drain electrode of the Q4-BMOS transistor is connected to the source electrode of the upper-bridge first MOS transistor 321 of the second three-phase bridge 32, a source electrode of the Q4-BMOS transistor is connected to the U1 phase of the first winding of the motor, a gate electrode of the Q4-BMOS transistor is connected to the second drive circuit 224, a drain electrode of the Q5-BMOS transistor is connected to the source electrode of the upper-bridge second MOS transistor 322 of the second three-phase bridge 32, a source electrode of the Q5-BMOS transistor is connected to the V1 phase of the first winding of the motor, a gate electrode of the Q5-BMOS transistor is connected to the second drive circuit 224, a drain electrode of the Q6-BMOS transistor is connected to the source electrode of the upper-bridge third MOS transistor 323 of the second three-phase bridge, a source electrode of the Q6-BMOS transistor is connected to the W1 phase of the first winding of the motor, and a gate electrode of the Q6-AMOS transistor is connected to the second drive circuit 224.

When both the first redundant control unit 211 and the second redundant control unit 221 are effective, the first drive circuit 214 controls the Q1-AMOS transistor, the Q2-AMOS transistor, and the Q3-AMOS transistor to be respectively connected to the U1, V1, and W1 phases of the first winding of the motor, and controls the Q1-BMOS transistor, the Q2-BMOS transistor, and the Q3-BMOS transistor to be respectively disconnected from the U2, V2, and W2 phases of the second winding of the motor; and the second drive circuit 224 controls the Q4-AMOS transistor, the Q5-AMOS transistor, and the Q6-AMOS transistor to be respectively connected to the U2, V2, and W2 phases of the second winding of the motor, and controls the Q4-BMOS transistor, the Q5-BMOS transistor, and the Q6-BMOS transistor to be respectively disconnected from the U1, V1, and W1 phases of the first winding of the motor.

When the first redundant control unit 211 fails, the Q1-AMOS transistor, the Q2-AMOS transistor, and the Q3-AMOS transistor are all disconnected from the U1, V1, and W1 phases of the first winding of the motor, and the second redundant control unit 221 may control the Q4-BMOS transistor, the Q5-BMOS transistor, and the Q6-BMOS transistor to be connected to the U1, V1, and W1 phases of the first winding of the motor. When the second redundant control unit 221 fails, the Q4-AMOS transistor, the Q5-AMOS transistor, and the Q6-AMOS transistor are all disconnected from the U2, V2, and W2 phases of the second winding of the motor, and the first redundant control unit 211 may control the Q1-BMOS transistor, the Q2-BMOS transistor, and the Q3-BMOS transistor to be connected to the U2, V2, and W2 phases of the second winding of the motor. Through the foregoing configuration, when one of the first redundant control unit 211 and the second redundant control unit 221 fails, the other can still control the U1, V1, W1, U2, V2, and W2 phases of the two windings of the motor.

Refer to FIG. 4 to FIG. 5B. As shown in FIG. 5A, the second circuit unit 40 may include the TVS diode 41, the capacitor 42, and the resistor 43. One end of the TVS diode 41 is connected to the source electrode of the MOS transistor 3010, and the other end of the TVS diode 41 is connected to one end of the resistor 43. When the end, of the TVS diode, connected to the winding of the motor is shocked by a transient high counter electromotive force, the TVS diode can suddenly reduce impedance thereof at an extremely high speed, and absorb a large current at the same time, to clamp the voltage between the two ends thereof to a predetermined value, thereby ensuring that the MOS transistor is not damaged under a transient high-energy shock. In addition, with the TVS diode 41, an MOS transistor 3010 with a comparatively low rated voltage may be allowed to be used, thereby avoiding a problem that the MOS transistor 3010 overheats due to an increase in impedance of the MOS transistor 3010 when the MOS transistor 3010 is turned on. The other end of the resistor 43 is connected to the drain electrode of the MOS transistor 3010, and the capacitor 42 is connected in parallel to the resistor 43. The capacitor 42 and the resistor 43 connected in parallel to each other can effectively reduce the selection specification of the TVS diode 41, so that a TVS diode with a comparatively low rated voltage can be used, thereby reducing product costs. Moreover, the counter electromotive force absorption capability of the second circuit unit can be improved.

In some embodiments, alternatively, the TVS diode 41 may be replaced with another electronic component configured to absorb a counter electromotive force from any phase of the motor. For example, the TVS diode 41 may be replaced with a diode.

In some embodiments, as shown in FIG. 5B, the second circuit unit 40 may include a first diode 441, a second diode 442, a capacitor 42, and a resistor 43. A positive electrode of the first diode is connected to a source electrode of an MOS transistor. A negative electrode of the first diode 441 is connected to a negative electrode of the second diode 442. A positive electrode of the second diode 442 is connected to one end of the resistor 43. The other end of the resistor 43 is connected to a drain electrode of the MOS transistor. The capacitor 42 is connected in parallel to the resistor 43.

When the motor generates a counter electromotive force, a voltage at a winding end of the motor is higher than a voltage at a three-phase bridge end. When the voltage at the winding end of the motor exceeds a rated voltage of the MOS transistor, the MOS transistor cannot bear the counter electromotive force generated by the motor, and consequently, the counter electromotive force shocks the first drive circuit and the second drive circuit that are at a front end. When the drain electrode and source electrode of the MOS transistor are connected in parallel to the second circuit unit, the second circuit unit can absorb a counter electromotive force generated by the motor, to avoid a shock of the counter electromotive force to the MOS transistor, thereby preventing the counter electromotive force from shocking the first drive circuit and the second drive circuit at the front end due to a failure of the MOS transistor.

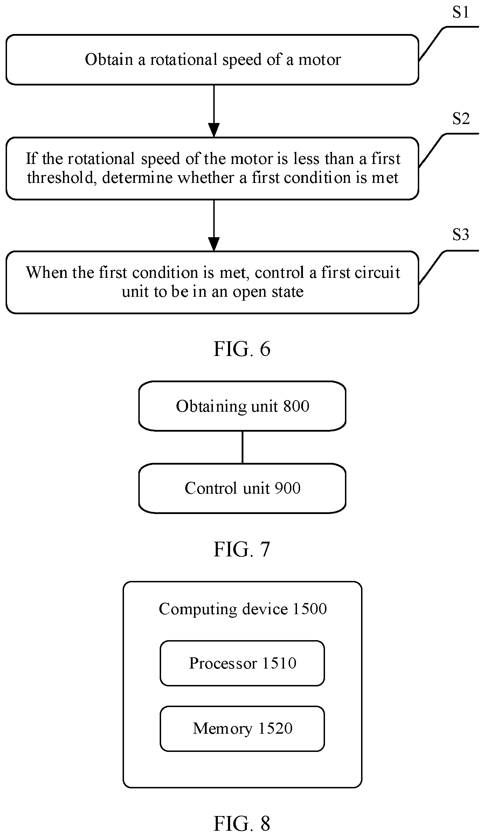

FIG. 6 shows a procedure of a circuit control method according to an embodiment of this application. The circuit control method provided in this embodiment of this application may be performed by a terminal, for example, a terminal such as an intelligent vehicle or a vehicle-mounted apparatus, or may be performed by an electronic apparatus, for example, a system on chip or a universal chip, that is applied to a terminal.

As shown in FIG. 6, the circuit control method for a motor provided in this embodiment of this application may include the following steps.

Step S 1: Obtain a rotational speed of the motor.

In some embodiments, step S1 may specifically include: obtaining angular velocity information of the motor and steering wheel torque information; obtaining a first rotational speed of the motor based on the angular velocity information of the motor, and obtaining a second rotational speed of the motor based on the steering wheel torque information; and when a rotational speed difference between the first rotational speed and the second rotational speed is less than a second threshold, obtaining a third rotational speed based on the first rotational speed and the second rotational speed, and using the third rotational speed as the rotational speed of the motor.

The angular velocity information of the motor and the steering wheel torque information may be information directly collected by a sensor (for example, a motor angular velocity sensor or a steering wheel torque sensor), or may be information obtained by processing information collected by a sensor. This is not limited in this application. The third rotational speed may be the first rotational speed, may be the second rotational speed, or may be a weighted average of the first rotational speed and the second rotational speed.

In some embodiments, the first rotational speed may be determined based on the steering wheel torque information. For example, the first rotational speed may be determined based on a torque angle with reference to a transmission ratio between a rotation axis, a retarding mechanism, a steering gear, and the motor.

Step S2: If the rotational speed of the motor is less than a first threshold, determine whether a first condition is met.

The first threshold may be set based on a first circuit unit. For example, the first threshold may be a value within a range from 1500 r/min to 3000 r/min.

In some embodiments, the first condition may include that an energy shock is detected, where the energy shock includes at least one of the following: a counter electromotive force shock or a current shock.

In some embodiments, the counter electromotive force shock may be further determined based on a voltage of a motor winding. For example, a voltage detector may be disposed on the motor winding, and electric potential information of the motor is determined by detecting a voltage value of the motor winding. When the voltage value is greater than a rated voltage of the first circuit unit, it indicates that the motor generates a counter electromotive force. When the voltage value is less than a rated voltage of the first circuit unit, it indicates that the motor generates no counter electromotive force.

Step S3: When the first condition is met, control the first circuit unit to be in a disconnected state.

For detailed descriptions of a circuit structure, refer to the foregoing embodiments of this application. For brevity, details are not described herein again.

In some embodiments, when a rated voltage of an NMOS included in the first circuit unit is 40 V, the first threshold may be 2000 r/min. When the rotational speed of the motor is less than the threshold, the first circuit unit may be controlled to be in a connected state. For example, when the rotational speed is less than 2000 r/min, the open-phase protection NMOS is connected or enabled. In this case, an open-phase protection operation may be performed when open-phase protection is required, for example, the open-phase protection NMOS is disconnected when the energy shock is detected. When the rotational speed is greater than 2000 r/min, the open-phase protection NMOS is disconnected or disabled. In this case, no open-phase protection operation is performed. In this state, the rotational speed of the motor is continuously obtained. When the rotational speed of the motor is less than 2000 r/min, the open-phase protection NMOS is connected or enabled. In this case, an open-phase protection operation may be performed when open-phase protection is required. For example, detection on whether the energy shock occurs may be performed at any time, and when it is detected that the energy shock occurs, an open-phase protection operation is performed, for example, the open-phase protection NMOS may be disconnected.

It should be noted that, because a voltage bearing capability of an MOS transistor is weak in a state switching process, herein, to avoid a case in which the MOS transistor is in a connected state and shocked by an excessively large counter electromotive force when the motor generates the excessively large counter electromotive force, whether open-phase protection needs to be performed may be controlled to be determined when the rotational speed is less than a specific threshold. When the rotational speed is comparatively low, an energy shock is comparatively small. For example, when the rotational speed is comparatively low, a counter electromotive force voltage is comparatively low; when the rotational speed is comparatively high, a counter electromotive force voltage is comparatively high. For example, whether the open-phase MOS transistor needs to switch between states is determined when the rotational speed is limited to a value less than 2000 r/min. When the rotational speed is greater than a specific threshold, for example, greater than 2000 r/min, to avoid a hardware failure, the open-phase MOS transistor is always kept in a disconnected state or a non-switching state.

In some embodiments, the circuit control method further includes: obtaining a fault signal of a second inverter, a third circuit unit, and a fourth circuit unit; and if the fault signal indicates that at least one of the second inverter, the third circuit unit, or the fourth circuit unit is faulty, that is, a third condition is met, controlling a fifth circuit unit to be connected.

The fault signal may be sent after a main control circuit of the second inverter detects a fault, or may be generated after a fault detection circuit in a drive chip of the second inverter detects a fault. This is not limited in this application.

In some embodiments, the circuit control method further includes: obtaining a fault signal of a first inverter, the first circuit unit, and a second circuit unit; and if the fault signal indicates that at least one of the first inverter, the first circuit unit, or the second circuit unit is faulty, that is, a fourth condition is met, controlling a sixth circuit unit to be connected.

The fault signal may be sent after a main control circuit of the first inverter detects a fault, or may be generated after a fault detection circuit in a drive chip of the first inverter detects a fault. This is not limited in this application.

FIG. 7 shows a circuit control apparatus according to an embodiment of this application. As shown in FIG. 7, the circuit control apparatus provided in this embodiment includes an obtaining unit 800 and a control unit 900.

The obtaining unit 800 is configured to obtain a rotational speed of a motor. The control unit 900 is configured to: when the rotational speed of the motor is less than a first threshold, determine whether a first condition is met. The control unit is further configured to: when the first condition is met, control a first circuit unit to be in a disconnected state.

Herein, a circuit includes the first circuit unit and a second circuit unit. A first end of the first circuit unit is configured to connect to an output end of a first inverter. A second end of the first circuit unit is configured to connect to the motor. The first circuit unit is configured to be in the disconnected state under the first condition. The second circuit unit is configured to absorb an energy shock. A first end of the second circuit unit is connected to the first end of the first circuit unit. A second end of the second circuit unit is connected to the second end of the first circuit unit.

In a possible implementation, the first condition includes that the energy shock is detected, where the energy shock includes at least one of the following: a counter electromotive force shock or a current shock.

In a possible implementation, the obtaining unit 800 is specifically configured to: obtain angular velocity information of the motor and steering wheel torque information; obtain a first rotational speed of the motor based on the angular velocity information of the motor, and obtain a second rotational speed of the motor based on the steering wheel torque information; and if a rotational speed difference between the first rotational speed and the second rotational speed is less than a second threshold, obtain a third rotational speed based on the first rotational speed and the second rotational speed, and use the third rotational speed as the rotational speed of the motor.

In a possible implementation, the circuit further includes a third circuit unit, a fourth circuit unit, and a fifth circuit unit. A first end of the third circuit unit is configured to connect to an output end of a second inverter. A second end of the third circuit unit is configured to connect to the motor. The third circuit unit is configured to be in a disconnected state under a second condition. The fourth circuit unit is configured to absorb an energy shock. A first end of the fourth circuit unit is connected to the first end of the third circuit unit. A second end of the fourth circuit unit is connected to the second end of the third circuit unit. A first end of the fifth circuit unit is connected to the first end of the first circuit unit. A second end of the fifth circuit unit is connected to the second end of the third circuit unit. The fifth circuit unit is configured to be connected under a third condition. The obtaining unit 800 is further configured to obtain a fault signal of the second inverter, the third circuit unit, and the fourth circuit unit. The control unit 900 is further configured to: if the fault signal indicates that at least one of the second inverter, the third circuit unit, or the fourth circuit unit is faulty, that is, the third condition is met, control the fifth circuit unit to be connected.

In a possible implementation, the circuit further includes a sixth circuit unit. A first end of the sixth circuit unit is connected to the first end of the third circuit unit. A second end of the sixth circuit unit is connected to the second end of the first circuit unit. The sixth circuit unit is configured to be connected under a fourth condition. The obtaining unit 800 is further configured to obtain a fault signal of the first inverter, the first circuit unit, and the second circuit unit. The control unit 900 is further configured to: if the fault signal indicates that at least one of the first inverter, the first circuit unit, or the second circuit unit is faulty, that is, the fourth condition is met, control the sixth circuit unit to be connected.

In a possible implementation, the second condition includes that the energy shock is detected, where the energy shock includes at least one of the following: a counter electromotive force shock or a current shock.

It should be noted that the foregoing units, namely, the obtaining unit 800 and the control unit 900, are configured to perform related steps of the foregoing method. For example, the obtaining unit 800 is configured to perform related content such as step S1, and the control unit 900 is configured to perform related content such as step S2 and step S3.

In this embodiment, the control apparatus is presented in a form of a unit. The "unit" herein may include an application-specific integrated circuit (application specific integrated circuit, ASIC), a processor executing one or more software or firmware programs and a memory, an integrated logic circuit, and/or another device that can provide the foregoing functions. In addition, the obtaining unit 800 and the control unit 900 may be implemented by using a computing device shown in FIG. 8.

FIG. 8 is a schematic diagram of a structure of a computing device 1500 according to an embodiment of this application. The computing device 1500 includes a processor 1510 and a memory 1520.

The processor 1510 may be connected to the memory 1520. The memory 1520 may be configured to store program code and data. Therefore, the memory 1520 may be a storage unit in the processor 1510, may be an external storage unit independent of the processor 1510, or may be a component that includes a storage unit in the processor 1510 and an external storage unit independent of the processor 1510.

Optionally, the computing device 1500 may further include a bus. The memory 1520 and a communications interface may be connected to the processor 1510 by using the bus. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like.

It should be understood that, in this embodiment of this application, a central processing unit (central processing unit, CPU) may be used as the processor 1510. Alternatively, the processor may be another general purpose processor, a digital signal processor (digital signal processor, DSP), an application-specific integrated circuit (application specific integrated circuit, ASIC), a field programmable gate array (field programmable gate Array, FPGA) or another programmable logic device, a discrete gate or transistor logic device, a discrete hardware component, or the like. The general purpose processor may be a microprocessor, or the processor may be any conventional processor or the like. Alternatively, the processor 1510 uses one or more integrated circuits to execute a related program, to implement the technical solutions provided in the embodiments of this application.

The memory 1520 may include a read-only memory and a random access memory, and provide instructions and data for the processor 1510. A part of the processor 1510 may further include a non-volatile random access memory. For example, the processor 1510 may further store device type information.

When the computing device 1500 runs, the processor 1510 executes computer-executable instructions in the memory 1520 to perform operation steps of the foregoing method.

It should be understood that the computing device 1500 according to this embodiment of this application may correspond to a corresponding entity for executing the method according to the embodiments of this application. In addition, the foregoing and other operations and/or functions of modules in the computing device 1500 are respectively used to implement corresponding procedures of the method in the embodiments. For brevity, details are not described herein again.

A person of ordinary skill in the art may be aware that units and algorithm steps described as examples with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It can be clearly understood by a person skilled in the art that, for ease and brevity of description, for specific working processes of the foregoing system, apparatus, and unit, reference may be made to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, and there may be another division manner during actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate components may be or may not be physically separate, and components displayed as units may be or may not be physical units, and may be located in one position, or may be distributed on a plurality of network units. Some or all of the units may be selected based on an actual requirement to achieve the objectives of the solutions in the embodiments.

In addition, functional units in the embodiments of this application may be integrated into one processing unit, or each of the units may exist alone physically, or two or more units may be integrated into one unit.

When the function is implemented in a form of a software function unit and is sold or used as an independent product, the function may be stored in a computer-readable storage medium. Based on such an understanding, the technical solutions in this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the method in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program. When the program is executed by a processor, the program is used to perform the foregoing circuit control method. The method includes at least one of the solutions described in the foregoing embodiments.

The computer storage medium in this embodiment of this application may be any combination of one or more computer-readable media. The computer-readable medium may be a computer-readable signal medium or a computer-readable storage medium. The computer-readable storage medium may be, for example but not limited to, an electric system, apparatus, or component, a magnetic system, apparatus, or component, an optical system, apparatus, or component, an electromagnetic system, apparatus, or component, an infrared system, apparatus, or component, or a semiconductor system, apparatus, or component, or any combination thereof. More specific examples (a non-exhaustive list) of the computer-readable storage medium include an electrical connection with one or more conducting wires, a portable computer disk, a hard disk, a random access memory (RAM), a read-only memory (ROM), an erasable programmable read-only memory (EPROM or a flash memory), an optical fiber, a compact disc read-only memory (CD-ROM), an optical storage device, a magnetic storage device, or any suitable combination thereof. In this specification, the computer-readable storage medium may be any tangible medium that includes or stores a program, where the program may be used by or used in combination with an instruction execution system, apparatus, or component.

The computer-readable signal medium may include a data signal propagated in a baseband or propagated as a part of a carrier, where the data signal carries computer-readable program code. Such a propagated data signal may be in various forms, including but not limited to an electromagnetic signal, an optical signal, or any suitable combination thereof. Alternatively, the computer-readable signal medium may be any computer-readable medium other than a computer-readable storage medium, where the computer-readable medium may send, propagate, or transmit a program used by or used in combination with an instruction execution system, apparatus, or component.

Program code included in the computer-readable medium may be transmitted by using any suitable medium, including but not limited to a wireless manner, an electric wire, an optical cable, RF, and the like, or any suitable combination thereof.

Computer program code used for performing the operations in this application may be written in one or more programming languages or a combination thereof. The programming languages include an object-oriented programming language, such as Java, Smalltalk, or C++, and further include a conventional procedural programming language, such as a "C" language or a similar programming language. The program code may be executed entirely on a user computer, executed partly on a user computer, executed as an independent software package, executed partly on a user computer and partly on a remote computer, or executed entirely on a remote computer or a server. When a remote computer is used, the remote computer may be connected to a user computer through any type of network, including a local area network (LAN) or a wide area network (WAN), or may be connected to an external computer (for example, through the Internet by using an Internet service provider).

In the specification and claims, words such as "first", "second", and "third" or similar expressions such as "module A", "module B", and "module C" are merely used to distinguish between similar objects, and do not represent a specific order of the objects. It can be understood that specific ordinal or sequential positions may be exchanged if allowed, so that the embodiments of this application described herein can be implemented in an order different from that illustrated or described herein.

"An embodiment" or "the embodiment" mentioned in this specification means that a specific feature, structure, or characteristic described with reference to the embodiment is included in at least one embodiment of the present invention. Therefore, the expression "in an embodiment" or "in the embodiment" appearing throughout in this specification does not necessarily refer to a same embodiment, but may refer to a same embodiment. Further, in one or more embodiments, specific features, structures, or characteristics can be combined in any proper manner, as will be clear from this disclosure to a person of ordinary skill in the art.

It should be noted that the foregoing descriptions are merely examples of embodiments of this application and technical principles used in this application. A person skilled in the art understands that the present invention is not limited to the specific embodiments described herein, and a person skilled in the art can make various obvious changes, readjustments, and replacements without departing from the protection scope of the present invention. Therefore, although this application is described in considerable detail by using the foregoing embodiments, the present invention is not limited to the foregoing embodiments, but may further include more other equivalent embodiments without departing from the idea of the present invention, and these equivalent embodiments all fall within the protection scope of the present invention.

## Claims

1. A circuit, comprising:
a first circuit unit, wherein a first end of the first circuit unit is configured to connect to an output end of a first inverter, a second end of the first circuit unit is configured to connect to a motor, and the first circuit unit is configured to be in a disconnected state under a first condition; and
a second circuit unit, wherein the second circuit unit is configured to absorb an energy shock, a first end of the second circuit unit is connected to the first end of the first circuit unit, and a second end of the second circuit unit is connected to the second end of the first circuit unit.

2. The circuit according to claim 1, wherein the circuit further comprises:
a third circuit unit, wherein a first end of the third circuit unit is configured to connect to an output end of a second inverter, a second end of the third circuit unit is configured to connect to the motor, and the third circuit unit is configured to be in a disconnected state under a second condition; and
a fourth circuit unit, configured to absorb an energy shock, wherein a first end of the fourth circuit unit is connected to the first end of the third circuit unit, and a second end of the fourth circuit unit is connected to the second end of the third circuit unit.

3. The circuit according to claim 2, wherein the motor comprises a first winding and a second winding, and that a second end of the first circuit unit is configured to connect to a motor specifically comprises: the second end of the first circuit unit is configured to connect to the first winding of the motor; and
that a second end of the third circuit unit is configured to connect to the motor specifically comprises: the second end of the third circuit unit is configured to connect to the second winding of the motor.

4. The circuit according to claim 2 or 3, further comprising:
a fifth circuit unit, wherein a first end of the fifth circuit unit is connected to the first end of the first circuit unit, a second end of the fifth circuit unit is connected to the second end of the third circuit unit, and the fifth circuit unit is configured to be connected under a third condition.

5. The circuit according to claim 4, wherein the third condition comprises at least one of the following: the second inverter is faulty, the third circuit unit is faulty, or the fourth circuit unit is faulty.

6. The circuit according to any one of claims 2 to 5, further comprising:
a sixth circuit unit, wherein a first end of the sixth circuit unit is connected to the first end of the third circuit unit, a second end of the sixth circuit unit is connected to the second end of the first circuit unit, and the sixth circuit unit is configured to be connected under a fourth condition.

7. The circuit according to claim 6, wherein the fourth condition comprises at least one of the following: the first inverter is faulty, the first circuit unit is faulty, or the second circuit unit is faulty.

8. The circuit according to any one of claims 1 to 7, wherein the second circuit unit comprises a transient voltage suppression diode; and
that a first end of the second circuit unit is connected to the first end of the first circuit unit, and a second end of the second circuit unit is connected to the second end of the first circuit unit specifically comprises: a first end of the transient voltage suppression diode is connected to the first end of the first circuit unit, and a second end of the transient voltage suppression diode is connected to the second end of the first circuit unit.

9. The circuit according to claim 8, wherein the second circuit unit further comprises a first resistor, a first end of the first resistor is connected to the transient voltage suppression diode, and a second end of the first resistor is connected to the second end of the first circuit unit.

10. The circuit according to claim 9, wherein the second circuit unit further comprises a first capacitor, and the first capacitor is connected in parallel to the first resistor.

11. The circuit according to any one of claims 1 to 10, wherein the first circuit unit comprises an NMOS transistor, a source electrode of the NMOS transistor is configured to connect to the first inverter, and a drain electrode of the NMOS transistor is configured to connect to the motor.

12. A circuit control method, wherein a circuit comprises a first circuit unit and a second circuit unit, a first end of the first circuit unit is configured to connect to an output end of a first inverter, a second end of the first circuit unit is configured to connect to a motor, the first circuit unit is configured to be in a disconnected state under a first condition, the second circuit unit is configured to absorb an energy shock, a first end of the second circuit unit is connected to the first end of the first circuit unit, and a second end of the second circuit unit is connected to the second end of the first circuit unit; and
the method comprises:
obtaining a rotational speed of the motor;
if the rotational speed of the motor is less than a first threshold, determining whether the first condition is met; and
when the first condition is met, controlling the first circuit unit to be in the disconnected state.

13. The method according to claim 12, wherein the first condition comprises that the energy shock is detected, wherein the energy shock comprises at least one of the following: a counter electromotive force shock or a current shock.

14. The method according to claim 12 or 13, wherein the obtaining a rotational speed of the motor specifically comprises:
obtaining angular velocity information of the motor and steering wheel torque information;
obtaining a first rotational speed of the motor based on the angular velocity information of the motor, and obtaining a second rotational speed of the motor based on the steering wheel torque information; and
if a rotational speed difference between the first rotational speed and the second rotational speed is less than a second threshold, obtaining a third rotational speed based on the first rotational speed and the second rotational speed, and using the third rotational speed as the rotational speed of the motor.

15. The method according to any one of claims 12 to 14, wherein the circuit further comprises a third circuit unit, a fourth circuit unit, and a fifth circuit unit;
a first end of the third circuit unit is configured to connect to an output end of a second inverter, a second end of the third circuit unit is configured to connect to the motor, and the third circuit unit is configured to be in a disconnected state under a second condition;
the fourth circuit unit is configured to absorb an energy shock, a first end of the fourth circuit unit is connected to the first end of the third circuit unit, a second end of the fourth circuit unit is connected to the second end of the third circuit unit, a first end of the fifth circuit unit is connected to the first end of the first circuit unit, a second end of the fifth circuit unit is connected to the second end of the third circuit unit, and the fifth circuit unit is configured to be connected under a third condition; and
the method further comprises:
obtaining circuit fault information; and
if the circuit fault information indicates that at least one of the second inverter, the third circuit unit, or the fourth circuit unit is faulty, controlling the fifth circuit unit to be connected.

16. The method according to claim 15, wherein the circuit further comprises a sixth circuit unit, a first end of the sixth circuit unit is connected to the first end of the third circuit unit, a second end of the sixth circuit unit is connected to the second end of the first circuit unit, and the sixth circuit unit is configured to be connected under a fourth condition; and
the method further comprises:
if the circuit fault information indicates that at least one of the first inverter, the first circuit unit, or the second circuit unit is faulty, controlling the sixth circuit unit to be connected.

17. A circuit control apparatus, wherein a circuit comprises a first circuit unit and a second circuit unit, a first end of the first circuit unit is configured to connect to an output end of a first inverter, a second end of the first circuit unit is configured to connect to a motor, the first circuit unit is configured to be in a disconnected state under a first condition, the second circuit unit is configured to absorb an energy shock, a first end of the second circuit unit is connected to the first end of the first circuit unit, and a second end of the second circuit unit is connected to the second end of the first circuit unit; and
the control apparatus comprises:
an obtaining unit, configured to obtain a rotational speed of the motor; and
a control unit, configured to: when the rotational speed of the motor is less than a first threshold, determine whether the first condition is met, wherein
the control unit is further configured to: when the first condition is met, control the first circuit unit to be in the disconnected state.

18. The apparatus according to claim 17, wherein the first condition comprises that the energy shock is detected, wherein the energy shock comprises at least one of the following: a counter electromotive force shock or a current shock.

19. The apparatus according to claim 17 or 18, wherein the obtaining unit is specifically configured to:
obtain angular velocity information of the motor and steering wheel torque information;
obtain a first rotational speed of the motor based on the angular velocity information of the motor, and obtain a second rotational speed of the motor based on the steering wheel torque information; and
if a rotational speed difference between the first rotational speed and the second rotational speed is less than a second threshold, obtain a third rotational speed based on the first rotational speed and the second rotational speed, and use the third rotational speed as the rotational speed of the motor.

20. The apparatus according to any one of claims 17 to 19, wherein the circuit further comprises a third circuit unit, a fourth circuit unit, and a fifth circuit unit;
a first end of the third circuit unit is configured to connect to an output end of a second inverter, a second end of the third circuit unit is configured to connect to the motor, and the third circuit unit is configured to be in a disconnected state under a second condition;
the fourth circuit unit is configured to absorb an energy shock, a first end of the fourth circuit unit is connected to the first end of the third circuit unit, a second end of the fourth circuit unit is connected to the second end of the third circuit unit, a first end of the fifth circuit unit is connected to the first end of the first circuit unit, a second end of the fifth circuit unit is connected to the second end of the third circuit unit, and the fifth circuit unit is configured to be connected under a third condition;
the obtaining unit is further configured to obtain circuit fault information; and
the control unit is further configured to: if the circuit fault information indicates that at least one of the second inverter, the third circuit unit, or the fourth circuit unit is faulty, control the fifth circuit unit to be connected.

21. The apparatus according to claim 20, wherein the circuit further comprises a sixth circuit unit, a first end of the sixth circuit unit is connected to the first end of the third circuit unit, a second end of the sixth circuit unit is connected to the second end of the first circuit unit, and the sixth circuit unit is configured to be connected under a fourth condition; and
the control unit is further configured to: if the circuit fault information indicates that at least one of the first inverter, the first circuit unit, or the second circuit unit is faulty, control the sixth circuit unit to be connected.

22. A computing device, comprising a processor and a memory, wherein the processor is coupled to the memory, the memory is configured to store a program or instructions, and when the program or the instructions is/are executed by the processor, the computing device is enabled to perform the control method according to any one of claims 12 to 16.

23. A computer-readable storage medium, wherein the computer-readable storage medium stores program code, and when the program code is executed by a terminal or a processor in a terminal, the control method according to any one of claims 12 to 16 is implemented.

24. A computer program product, wherein when the computer program product is run on a computer, the control method according to any one of claims 12 to 16 is implemented.

25. A steering system, comprising the circuit according to any one of claims 1 to 11, the circuit control apparatus according to any one of claims 17 to 21, and a motor.

26. A vehicle, comprising the circuit according to any one of claims 1 to 11, the circuit control apparatus according to any one of claims 17 to 21, and a motor.
